# EUROPÄISCHE PATENTSCHRIFT

(11) **EP 0 641 056 B1**
(45) Veröffentlichungstag und Bekanntmachung des Hinweises auf die Patenterteilung: **09.07.1997**
(21) Anmeldenummer: 94113043.7
(22) Anmeldetag: 21.08.1994
(51) Int. Cl.: H02H 7/09, H02H 7/085

(54) **Überwachungseinrichtung für mehrere Leitungen, die mehrphasigen Wechselstrom führen**
Monitoring device for several lines conducting multiphase a.c.
Dispositif de surveillance pour plusieurs conducteurs conduisant un courant alternatif polyphasé

(30) Priorität: 25.08.1993 AT 1708/93
(43) Veröffentlichungstag der Anmeldung: 01.03.1995
(73) Patentinhaber: Harbauer, Heinrich, 6150 Steinach (AT)
(72) Erfinder: Harbauer, Heinrich, 6150 Steinach (AT)
(74) Vertreter: Torggler, Paul, Dr.

(56) Entgegenhaltungen:
- DE-A- 3 731 543
- FR-A- 2 302 614
- US-A- 4 027 202
- PATENT ABSTRACTS OF JAPAN vol. 17, no. 646 (E-1467) 30. November 1993 & JP-A-05 207 644 (TOGAMI ELECTRIC) 13. August 1993

## Beschreibung

Die Erfindung betrifft eine Überwachungseinrichtung mit den Merkmalen des Oberbegriffs des Anspruchs 1. Eine Einrichtung dieser Art ist durch den japanischen Patent-abstrakt PATENT ABSTRACT OF JAPAN vol.17, no. 646 (E-1467) 30. November 1993 & JP-A-05 207 644 (TOGAMI ELECTRIC) 13. August 1993 bekannt geworden.

Zur Überwachung von Wechselstromnetzen, die ein- oder mehrphasig (Drehstromnetz) sein können, sind Schmelzsicherungen bestens bekannt. Diese dienen jedoch hauptsächlich als Kurzschlußschutz und erlauben keine präzise Stromüberwachung.

Aufgabe der Erfindung ist es, eine Überwachungseinrichtung der eingangs erwähnten Gattung zu schaffen, mit der sich eine präzise und rasch ansprechende Überwachung bewerkstelligen läßt.

Erfindungsgemäß wird die Aufgabe durch die kennzeichnenden Merkmale des Anspruchs 1 gelöst.

Über den Stromwandler erhält man ein gegenüber dem in den Leitungen geführten Wechselstrom bzw. Drehstrom galvanisch getrennten Ausgang, wobei die Ausgangsspannung die zu messende Stromstärke wiedergibt. Dieses Spannungssignal wird dann einer Vergleichseinrichtung (Istwerteingang) zugeführt. An mindestens einen Sollwerteingang der Vergleichseinrichtung kann beispielsweise eine Spannung angelegt werden, die einer gewünschten Stromstärke entspricht. Im einfachsten Fall kann damit ein Überstromschutz erzielt werden: Überschreitet das der Stromstärke proportionale Ausgangssignal aus dem Stromwandler den Sollwert, so gibt die Vergleichseinrichtung ein bestimmtes Ausgangssignal ab. Die Vergleichseinrichtung kann aber auch komplexere Vergleichsoperationen vornehmen, z. B. bei Überschreiten eines bestimmten ersten Sollwertes ein bestimmtes Ausgangssignal abgeben und bei Unterschreiten eines zweiten Sollwertes ebenfalls das bestimmte Ausgangssignal abgeben. Der zweite Sollwert kann mit dem ersten fix korreliert sein, beispielsweise immer ein Drittel desselben betragen.

Dieses Ausgangssignal kann beispielsweise zur Auslösung eines Alarms benutzt werden. Günstiger ist es jedoch, eine automatische Sicherungseinrichtung zu bilden, indem gemäß einer bevorzugten Ausführungsform in der Leitung, in der der Stromwandler angeordnet ist, eine Schalteinheit angeordnet ist, deren Schaltzustand in Abhängigkeit am Ausgangssignal der Vergleichseinrichtung gesteuert ist.

Die erfindungsgemäße Überwachungseinrichtung wird in einem mehrphasigen Wechselstromnetz (beispielsweise Drehstromnetz) eingesetzt. Hier wird in lediglich einer Leitung (Phase) ein Stromwandler angeordnet, jedoch gleichzeitig die Spannungen aller Leitungen (Phasen) wird überwacht. Diese Ausführungsform geht von der Idee aus, daß bei bestimmten Verbrauchern, beispielsweise Drehstrommotoren die einzelnen Phasen miteinander gekoppelt sind, so daß bei dem Ausfall einer Phase oder einer Leitungsunterbrechung zum oder im Verbraucher auch Änderungen in den beiden anderen Phasen auftreten, welche von der Überwachungseinrichtung erkannt werden, wie dies im folgenden noch näher beschrieben werden wird.

Weitere Vorteile und Einzelheiten der Erfindung werden anhand eines Ausführungsbeispieles näher erläutert.

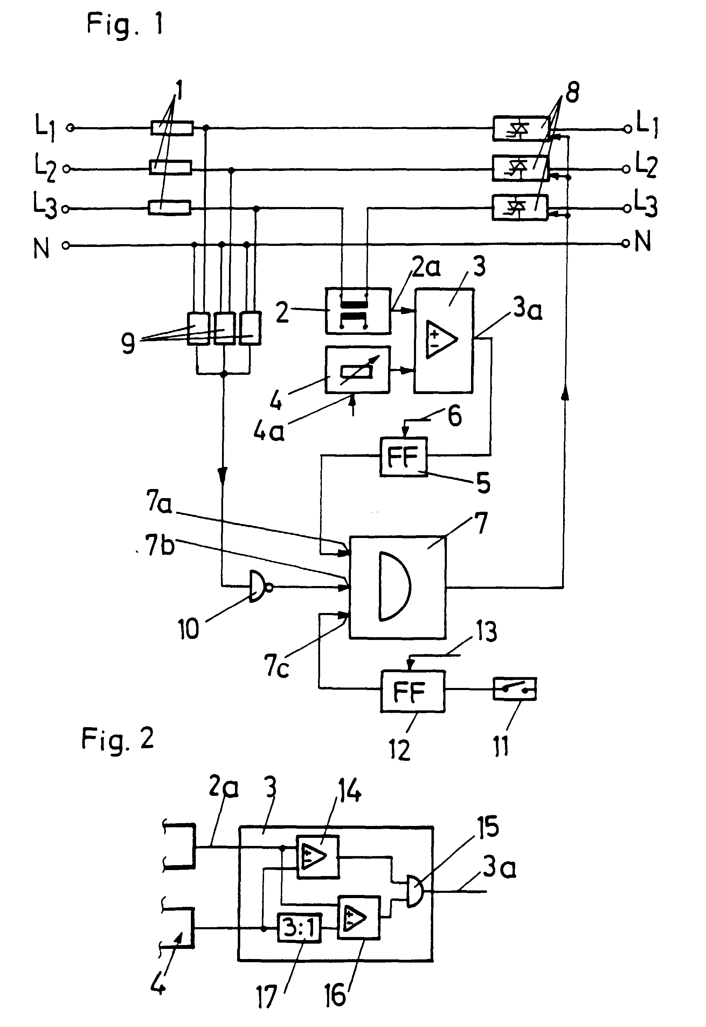

Die Fig. 1 zeigt schematisch ein Ausführungsbeispiel einer erfindungsgemäßen Überwachungseinrichtung für ein dreiphasiges Wechselstromnetz (Drehstromnetz). Fig. 2 zeigt ein Ausführungsbeispiel einer Vergleichseinrichtung.

In der Figur links kommen die Leitungen vom Drehstromnetz herein. Jede Leitung L₁, L₂, L₃ führt beispielsweise eine 220 Volt-Wechselspannung, wobei die Spannungen um jeweils 120° gegeneinander verschoben sind (übliches Drehstromnetz). Der 0-Leiter ist mit N bezeichnet. In jeder der Leitungen ist als Kurzschlußschutz eine Sicherung 1 angeordnet, die beispielsweise eine Schmelzsicherung sein kann. Lediglich in der Leitung L₃ ist erfindungsgemäß ein Stromwandler 2 angeordnet, der an seinem Meßausgang 2a in Abhängigkeit von der zu messenden Stromstärke in der Leitung L₃ ein Spannungssignal abgibt. Eine Vergleichseinrichtung 3 vergleicht dieses Spannungssignal mit einem Sollwert, der aus der Sollwertvorgabe 4 stammt und beispielsweise über einen Sollwerteingang 4a einstellbar ist.

Befindet sich das dem Stromwert in der Leitung 3 entsprechende Spannungssignal unter dem Sollwertsignal (und oberhalb eines Drittels des Sollwertsignals, vgl. Fig. 2 und deren Beschreibung), so ist der Ausgang 3a der Vergleichseinrichtung 3a auf logisch "1" über ein Halteglied 5, das über einen Reseteingang 6 zurückgesetzt werden kann, ist der Ausgang 3a der Vergleichseinrichtung mit dem Eingang 7a der Verarbeitungsschaltung 7 verbunden.

Wenn nur eine Leitung (Phase) überwacht werden soll, kann diese Verarbeitungseinrichtung 7 auch entfallen und vom Ausgang 3a der Vergleichseinrichtung 3 im wesentlichen direkt die Schalteinheit 8 in der Leitung L₃ gesteuert werden, sodaß bei Überschreiten eines präzise vorgebbaren Stromwertes in der Leitung L₃ sofort eine Abschaltung über die Schalteinheit erfolgt. Diese Schalteinheit kann als Thyristorschalter aufgebaut sein, der einen Triac enthält.

Beim vorliegenden Ausführungsbeispiel sollen jedoch drei Leitungen (Phasen) L₁, L₂, L₃ überwacht werden. Um lediglich mit einer Strommeßeinrichtung auszukommen und dennoch eine Überwachung aller drei Phasen zu ermöglichen ist vorgesehen, daß an jeder Leitung L₁, L₂, L₃ eine Spannungsüberwachungseinrichtung angeordnet ist, die in Abhängigkeit von der gemessenen Spannung bezogen auf den 0-Leiter N ein Ausgangssignal abgeben. Dieses Ausgangssignal ist bei normaler Betriebsspannung auf den Leitungen L₁, L₂, L₃ auf logisch "0" womit über das NICHT-Gatter 10 am Eingang 7b der Verarbeitungsschaltung 7 logisch "1" ansteht.

Die Einrichtung funktioniert nun wie folgt: Fällt eine der Sicherungen 1 aus, so wird dies von der entsprechenden Spannungsüberwachungseinrichtung erkannt. Der Ausgang geht auf logisch "1" und damit der Eingang 7b der vorzugsweise ein logisches UND-Gatter enthaltenden Verarbeitungsschaltung auf logisch "0". Damit ändert sich der Ausgang der Verarbeitungsschaltung derart, daß über die Schalteinheiten 8 alle drei Leitungen L₁, L₂, L₃ abgeschaltet werden.

Ein Problem könnte noch dadurch entstehen, daß bestimmte Verbrauche, beispielsweise Drehstrommotoren bei Ausfall einer Phase eine Rückspannung liefern, die der fehlenden Phase den Winkel und Betrag nach Recht genau entspricht, sodaß die Spannungsüberwachungseinrichtung (Phasenwächter) nicht anspricht. Speziell die SynchronMaschinen bilden die Spannung exakt nach. Bei Ausfall einer Phase nimmt aber der Strom in den beiden verbleibenden Phasen zu bzw. er wird in der unterbrochenen Phase gleich Null. Somit kann durch Messung des Stromes in einer Phase auch bei Rückspannungen ein Phasenausfall bzw. eine Unterbrechung der Leitung zum Verbraucher oder im Verbraucher erkannt werden.

Die Stromüberwachung in nur einer Phase eignet sich vor allem bei Verbrauchern, die im allgemeinen alle drei Phasen gleich belasten, insbesondere für Drehstrommotoren. Überschreitet der Stromwert einen in der Sollwertvorgabe 4 einstellbaren Wert, geht der Ausgang der Vergleichseinrichtung 3a auf logisch "0" und über die Verarbeitungsschaltung 7 werden alle drei Schalteinrichtungen 8 abgeschaltet. Über ein Halteglied 5 kann dieser Zustand gehalten werden, bis er von einer Bedienungsperson mittels eines Signals auf den Reseteingang 6 wieder zurückgesetzt (quittiert) wird.

Fig. 2 zeigt ein Ausführungsbeispiel einer Vergleichseinrichtung 3, die neben einer Überschreitung eines Stromwertes auch eine Unterschreitung erkennt. Die Vergleichseinrichtung 3 arbeitet als Fensterkomparator, welcher den vom Ausgang 2a zugeführten Istwert mit einer oberen Schranke, den Sollwert aus der Sollwertvorgabe 4, und gleichzeitig mit einer unteren Schranke (hier ein Drittel des Sollwertes) vergleicht. Sobald der Istwert außerhalb dieser beiden Schranken liegt, gibt die Vergleichseinrichtung über ihren Ausgang 3a ein bestimmtes Ausgangssignal ab, das beispielsweise die Abschaltung der Thyristorschalter 8 bewirkt. Im einzelnen umfaßt die Vergleichseinrichtung 3 einen ersten Komparator 14, der den Istwert mit dem Sollwert vergleicht und bei Überschreiten desselben ein bestimmtes Ausgangssignal an das UND-Glied 15 abgibt. Ein zweiter Komparator 16 vergleicht den Istwert mit einem Drittel des Sollwertes, wobei das Drittel des Sollwertes in einem Teiler 17 gebildet wird. Damit kann die Vergleichseinrichtung 3 nicht nur ein Überschreiten eines einstellbaren Sollwertes, sondern auch einen zu geringen Strom (insbesondere Null bei Leitungsbruch od. dgl.) erkennen.

Die Verarbeitungseinrichtung 7 kann zusätzlich noch weitere Parameter überwachen, beispielsweise kann auf dem Verbraucher ein thermischer Schutzschalter angeordnet sein, der bei thermischer Überlastung öffnet. Damit geht der weitere Eingang 7c mit der logischen Verarbeitungseinrichtung 7 auf 0 und es kommt ebenfalls zu einer Abschaltung der Leitungen L₁, L₂, L₃ über die Thyristorschalter 8. Auch dieser Zustand kann über ein Halteglied 12 gehalten werden, bis eine Bedienungsperson von außen wieder eine Zurücksetzung über den Eingang 13 vornimmt.

## Patentansprüche

1. Überwachungseinrichtung für mehrere Leitungen, insbesondere mit drei Leitungen, die mehrphasigen Wechselstrom führen, wobei in nur einer der Leitungen (L₁, L₂, L₃) ein Stromwandler (2) angeordnet ist, der an seinem Meßausgang (2a) in Abhängigkeit von der zu messenden Stromstärke ein Spannungssignal abgibt, welches einer Vergleichseinrichtung (3) zugeführt wird, die das Spannungssignal mit mindestens einem vorzugsweise einstellbaren Sollwert vergleicht und in Abhängigkeit vom Vergleichsergebnis ein Ausgangssignal liefert, und in allen Leitungen (L₁, L₂, L₃) jeweils eine Schalteinheit (8) angeordnet ist, die in Abhängigkeit vom Ausgangssignal der Vergleichseinrichtung (3) des einzigen Stromwandlers (2) gesteuert sind, dadurch gekennzeichnet, daß an allen Leitungen (L₁, L₂, L₃) Spannungsüberwachungseinrichtungen (9) angeschlossen sind, welche in Abhängigkeit von der gemessenen Spannung Ausgangssignale abgeben, wobei diese Ausgangssignale und das Ausgangssignal der Vergleichseinrichtung (3) an die Eingänge einer Verarbeitungsschaltung (7) zur gemeinsamen Verarbeitung dieser Signale geführt sind und die Verarbeitungsschaltung (7) in Abhängigkeit von den Ausgangssignalen der einzelnen Spannungsüberwachungseinrichtungen (9) und dem Ausgangssignal der Vergleichseinrichtung (3) des Stromwandlers (2) alle Schalteinheiten (8) gemeinsam ansteuert.

2. Überwachungseinrichtung nach Anspruch 1, dadurch gekennzeichnet, daß die Verarbeitungsschaltung (7) zumindest ein logisches Gatter aufweist, vorzugsweise ein UND-Gatter, dessen Eingänge mit den Eingängen (7a, 7b, 7c) der Verarbeitungsschaltung (7) in Verbindung stehen und dessen Ausgang ein Steuersignal abgibt.

3. Überwachungseinrichtung nach Anspruch 1 oder 2, dadurch gekennzeichnet, daß die Verarbeitungsschaltung (7) neben den Eingängen (7a, 7b) für die Ausgangssignale noch zumindest einen weiteren Eingang (7c) für ein externes Signal aufweist.

4. Überwachungseinrichtung nach Anspruch 3, dadurch gekennzeichnet, daß der weitere Eingang (7c) ein externes Signal von einer Einrichtung (11) zur Erfassung des Zustandes des vom überwachten Stromnetz gespeisten Verbrauchers empfängt.

5. Überwachungseinrichtung nach Anspruch 4, dadurch gekennzeichnet, daß am bzw. im Verbraucher, vorzugsweise Motor, ein thermischer Schutzschalter (11) angeordnet ist, der mit dem weiteren Eingang (7c) in Verbindung steht.

6. Überwachungseinrichtung nach einem der Ansprüche 1 bis 5, dadurch gekennzeichnet, daß in mindestens einer, vorzugsweise allen stromführenden Leitungen zusätzlich eine Sicherung, vorzugsweise Schmelzsicherung (1) eingebaut ist und die Spannungsüberwachungseinrichtungen (9) die Spannung auf der dem Verbraucher zugewandten Seite der Sicherung (1) erfaßt.

7. Überwachungseinrichtung nach einem der Ansprüche 1 bis 6, dadurch gekennzeichnet, daß die Vergleichseinrichtung (3) derart aufgebaut ist, daß sie sowohl bei Überschreiten eines ersten Sollwertes als auch bei Unterschreiten eines zweiten Sollwertes ein bestimmtes Ausgangssignal liefert.

## Claims

1. A monitoring apparatus for a plurality of lines, in particular with three lines which carry polyphase alternating current, wherein arranged in only one of the lines (L₁, L₂, L₃) is a current transformer (2) which at its measurement output (2a), in dependence on the current strength to be measured, outputs a voltage signal which is fed to a comparison means (3) which compares the voltage signal to at least one preferably adjustable reference value and in dependence on the comparison result delivers an output signal, and arranged in all lines (L₁, L₂, L3) are respective switching units (8) which are controlled in dependence on the output signal of the comparison means (3) of the single current transformer (2), characterised in that connected to all lines (L₁, L₂, L₃) are voltage monitoring apparatuses (9) which output output signals in dependence on the measured voltage, wherein said output signals and the output signal of the comparison means (3) are passed to the inputs of a processing circuit (7) for joint processing of said signals and the processing circuit (7) jointly actuates all switching units (8) in dependence on the output signals of the individual voltage monitoring apparatuses (9) and the output signal of the comparison means (3) of the current transformer (2).

2. A monitoring apparatus according to claim 1 characterised in that the processing circuit (7) has at least one logic gate, preferably an AND-gate, whose inputs are connected to the inputs (7a, 7b, 7c) of the processing circuit (7) and whose output outputs a control signal.

3. A monitoring apparatus according to claim 1 or claim 2 characterised in that, besides the inputs (7a, 7b) for the output signals, the processing circuit (7) also has at least one further input (7c) for an external signal.

4. A monitoring apparatus according to claim 3 characterised in that the further input (7c) receives an external signal from a device (11) for detecting the state of the load supplied by the monitored current network.

5. A monitoring apparatus according to claim 4 characterised in that arranged on or in the load, preferably a motor, is a thermal protective switch (11) which is connected to the further input (7c).

6. A monitoring apparatus according to one of claims 1 to 5 characterised in that a safety cutout, preferably a safety fuse (1), is additionally installed in at least one and preferably all current-carrying lines and the voltage monitoring apparatuses (9) detect the voltage on the side of the safety cutout (1), which is towards the load.

7. A monitoring apparatus according to one of claims 1 to 6 characterised in that the comparison means (3) is so designed that it supplies a given output signal both when the compared signal exceeds a first reference value and also when the compared signal falls below a second reference value.

## Revendications

1. Dispositif de contrôle pour plusieurs lignes, notamment comportant trois lignes, qui véhiculent un courant alternatif polyphasé, et dans lequel dans seulement l'une des lignes (L₁,L₂,L₃) est disposé un transformateur d'intensité (2), qui délivre, sur sa sortie de mesure (2a), en fonction de l'intensité du courant à mesurer, un signal de tension, qui est envoyé à un dispositif comparateur (3), qui compare le signal de tension à au moins une valeur de consigne réglable de préférence, et délivre un signal de sortie en fonction du résultat de la comparaison, et dans toutes les lignes (L₁,L₂,L₃) sont disposées des unités respectives de commutation (8), qui sont commandées en fonction du signal de sortie du dispositif comparateur (3) du transformateur d'intensité unique (2), caractérisé en ce qu'à toutes les lignes (L₁,L₂,L₃) sont raccordés des dispositifs de contrôle de tension (9), qui délivrent des signaux de sortie en fonction de la tension mesurée, ces signaux de sortie et le signal de sortie du dispositif comparateur (3) étant envoyés aux entrées d'un circuit de traitement (7) servant à réaliser le traitement commun de ces signaux, tandis que le circuit de traitement (7) commande en commun toutes les unités de commutation (8) en fonction des signaux de sortie des différents dispositifs individuels de contrôle de tension (9) et du signal de sortie du dispositif comparateur (3) du transformateur d'intensité (2).

2. Dispositif de contrôle selon la revendication 1, caractérisé en ce que le circuit de traitement (7) comporte au moins une porte logique, de préférence une porte ET, dont les entrées sont reliées aux entrées (7a,7b,7c) du circuit de traitement (7) et dont la sortie délivre un signal de commande.

3. Dispositif de contrôle selon la revendication 1 ou 2, caractérisé en ce que le circuit de traitement (7) comporte, en dehors des entrées (7a,7b) pour les signaux de sortie, également au moins une autre entrée (7c) pour un signal extérieur.

4. Dispositif de contrôle selon la revendication 3, caractérisé en ce que l'autre entrée (7c) reçoit un signal extérieur provenant d'un dispositif (11) servant à détecter l'état de l'appareil d'utilisation alimenté par le réseau de courant contrôlé.

5. Dispositif de contrôle selon la revendication 4, caractérisé en ce que sur ou dans l'appareil d'utilisation, de préférence un moteur, est installé un disjoncteur de protection thermique (11), qui est relié à l'autre entrée (7a).

6. Dispositif de contrôle selon l'une des revendications 1 à 5, caractérisé en ce qu'un élément de sécurité, de préférence un fusible (1), est monté additionnellement dans au moins l'une des lignes de préférence dans toutes les lignes de courant et que les dispositifs de contrôle de tension (9) détectent la tension sur le côté du fusible (11) tourné vers l'appareil d'utilisation.

7. Dispositif de contrôle selon l'une des revendications 1 à 6, caractérisé en ce que le dispositif comparateur (3) est agencé de telle sorte qu'il délivre un signal de sortie déterminé, aussi bien lors du dépassement d'une première valeur de consigne par le haut que lors du dépassement d'une seconde valeur de consigne par le bas.
